**Europäisches Patentamt**

**European Patent Office**

**Office européen des brevets**

(19)

(11) Publication number : **0 414 892 B1**

# EUROPEAN PATENT SPECIFICATION

(12)

(45) Date of publication of patent specification :
01.09.93 Bulletin 93/35

(51) Int. Cl.⁵ : **B60C 9/20**

(21) Application number : **89903234.6**

(22) Date of filing : **08.03.89**

(86) International application number :
**PCT/JP89/00251**

(87) International publication number :
**WO 90/10548 20.09.90 Gazette 90/22**

(54) **PNEUMATIC RADIAL TIRE.**

(43) Date of publication of application :
06.03.91 Bulletin 91/10

(45) Publication of the grant of the patent :
01.09.93 Bulletin 93/35

(84) Designated Contracting States :
**DE FR GB IT LU**

(56) References cited :
**EP-A- 0 043 563**
**EP-A- 0 248 164**
**GB-A- 2 096 950**
**JP-A- 6 112 989**
**JP-A-57 198 101**
**JP-A-61 119 405**
**JP-A-61 119 407**
**JP-A-62 289 404**
**JP-U- 6 319 404**

(73) Proprietor : **Bridgestone Corporation**
**1-1, Kyobashi 1-Chome Chuo-Ku**
**Tokyo 104 (JP)**

(72) Inventor : **BUNDO, Motonori 4-8-401, Ogawa**
**Higashicho**
**3-chome Kodaira-shi**
**Tokyo 187 (JP)**
Inventor : **NAKAGAWA, Sumito**
**5-5-712, Ogawa Higashicho 3-chome**
**Kodaira-shi Tokyo 187 (JP)**

(74) Representative : **Whalley, Kevin et al**
**MARKS & CLERK 57/60 Lincoln's Inn Fields**
**London WC2A 3LS (GB)**

## Description

This invention relates to a pneumatic radial tire using metallic cords coated with an elastomer as a belt layer, and more particularly it is to improve the durability without sacrificing the rolling resistance and running performances by avoiding cord breakage in the belt ply layer.

In the radial tire, a twisted cord obtained by twisting 4 or 5 filaments each having a diameter of about 0.20 mm ~ 0.30 mm and represented by 1×4 or 1×5, a twisted cord obtained by twisting 7 filaments around 2 filaments and represented by 2+7, and the like are used in the belt ply layer. The tires using such cords had substantially satisfactory running performances, durability and rolling resistance.

Recently, with the advance of higher performances in passenger cars and the like, it is required that the tire to be mounted onto the vehicle is provided with higher improved performances, i.e. the running performances are high and the rolling resistance contributing to low fuel consumption and the like. From GB-A-2096950 (corresponding to Japanese Patent laid open No. 57-198101), are known, besides the features of the preamble of claim 1, additionally the features that the filament diameter of the single metal cords is between 0,12 and 0,603 mm and the belt layers have an end count in the range of 30 to 70 cords per 50 mm. Furthermore there is described such a tire that a distance between centers of cords in two belt layers in radial direction of the tire when using the twisted cord or a single steel wire cord (hereinafter referred to as a single filament cord) in the belt ply layer does not exceed 1.0 mm and further an end count per 10 cm is not less than 60 cords. In this tire, it is attempted to ensure good rolling resistance by restraining the distance between cord centers in the belt ply layers to not more than 1.0 mm to reduce the volume of rubber coating the cord and hence decrease the energy loss through rubber by the reduced volume.

In this article, there are described an example of decreasing the twisting number in the metal cord to 5, 4, and 3, and an example of using a single filament as a cord. According to the inventors' studies, it has been confirmed that as the twisting number is decreased, energy loss of rubber penetrated into the inside of the cord and energy loss between the cords are reduced to obtain a very good rolling resistance, and further in case of using the single filament cord, the energy loss of rubber penetrated into the cord and the energy loss between the cords can considerably be reduced as compared with the case of using the twisted cord to obtain the better rolling resistance and consequently the belt structure using such cords is suitable for satisfying the high performances of the tire. Besides, there is known a passenger car tire having belt ply layers each obtained by embedding many single steel filament cords in rubber (Japanese Utility Model laid open No. 63-19404).

In the tires provided with belt layers of the single filament cords having good rolling resistance, however, the cord is apt to be fatigued, and there is remaining a problem that the cord breakage is frequently caused when performing, for example, a fatigue test of cord during rapid cornering, which is called as a so-called eight shape slalom test.

According to this test, the cord breakage becomes easy as the twisting number in the twisted cord decreases or in case of the single filament cord as compared with the twisted cord, so that the durability of the cord against fatigue (hereinafter referred to as a fatigue resistance) is conflicting with the objective running performances and rolling resistance. As a means for improving the fatigue resistance of cords, it is considered to increase the rubber gauge between the cords or the end count of cords, and the like.

At first, the increase of rubber gauge between the cords fairly restrains the cord breakage, but results in the degradation of the rolling resistance. While, the increase of the end count can reduce a force applied to the cord to restrain the cord breakage, but increases the weight to injury the rolling resistance.

Alternatively, there are considered a technique in which a peculiar breaker structure reinforced with cords composed of high elasticity and substantially inextensible rubber material is disposed between carcass and tread in the tire (Japanese Patent laid open No. 62-289404), a technique in which a rubber sheet layer containing short fibers extremely oriented in the circumferential direction of the tire is arranged between end portion of belt and tread or between the belt layers in the belt (Japanese Patent laid open Nos. 61-119405 and 61-119407) and the like. However, it can not be said that these techniques are still sufficient in the prevention of cord breakage.

It is, therefore, an object of the invention to propose a tire structure capable of simultaneously improving the running performances, the rolling resistance and the fatigue resistance of cords.

It is known that the cord breakage phenomenon by the eight shape slalom test is caused due to buckling deformation of a treading portion constituted with tire case, belt and tread during the running of the tire under loading. A critical compression force $N_{critical}$ of the belt beginning the occurrence of buckling deformation can be represented by the following equation when a compressive spring constant of tread is k and a bending rigidity of belt is D:

$$N_{critical} \propto \sqrt{kD}$$

As seen from the above equation, it is necessary to make the compressive spring constant k of the tread or the bending rigidity D of the belt large in order to increase the critical compression force in the occurrence of buckling deformation for suppressing the cord breakage. If the properties of tread rubber are changed in a direction increasing the tread compressive spring constant k, the running performances of the tire such as steering stability on dry and wet roads, ride comfortability against vibrations and the like naturally required in the tread rubber are degraded.

On the other hand, the freedom degree of the changing in the non-twisted single filament cord is restricted for increasing the belt bending rigidity D, so that such an object can be achieved only by increasing the cord diameter. However, in the passenger car tires, the ride comfortability against vibrations considerably degrades when the filament diameter of the single filament cord is increased, so that the increase of filament diameter is not convenient.

Now, it has been examined with respect to a means for avoiding cord breakage under a large input force and belt end separation on general running road by adding a third constituent in addition to the tread rubber and the single filament cord.

That is, various experiments were made with respect to tires having a belt bending rigidity D enhanced by arranging a reinforcing layer at a widthwise portion of tread outside the belt portion causing the occurrence of buckling deformation on cord breakage in the radial direction of tire over full periphery of tire, and as a result, it has been found that the fatigue resistance of the cord is improved and the running performances and rolling resistance are good without causing belt end separation during general running, and the invention has been accomplished.

The above mentioned object is achieved according to the invention by the features of claim 1, i.e. by a pneumatic radial tire comprising a radial carcass ply, a tread arranged outside a crown region of the carcass in radial direction, and a belt disposed between the tread and the crown region of the carcass, wherein the belt is comprised of at least two belt ply layers each containing single metal filament cords of 0.28~0.70 mm in filament diameter arranged in parallel to each other and at a cord angle of 15~30° with respect to an equatorial plane of the tire and having an end count of 30~120 cords per 50 mm, and a rubber reinforcing layer having a 25% modulus of 20~80 kg/cm$^2$ and a thickness of not less than 1 mm is arranged substantially adjacent to the belt ply layer.

Fig. 1 is a sectional view of a pneumatic radial tire according to the invention; and

Figs. 2~4 are sectional views of another structures.

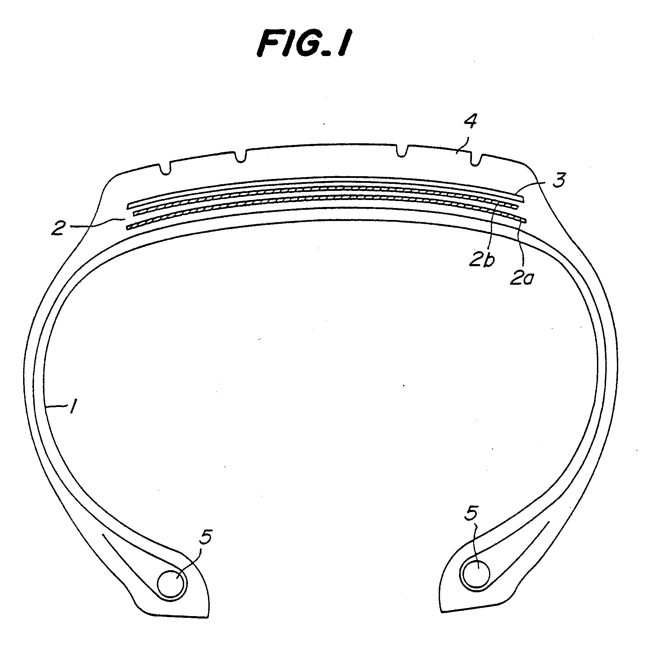

In the pneumatic radial tires shown in Figs. 1~4, 1 is a carcass, 2 a belt ply layer, 3 a rubber reinforcing layer, 4 a tread and 5 a bead core. The belt ply layer 2 is comprised of a ply obtained by arranging single filament cords of 0.28~0.70 mm in filament diameter at 15~30° with respect to the equatorial plane of the tire and at an end count of 30~120 cords per 50 mm. In the illustrated embodiments, the belt has a two layer structure of first belt ply layer 2a and second belt ply layer 2b. When the single filament cord in the belt ply layer is arranged at an angle of less than 15° with respect to the equatorial plane of the tire, the bending rigidity in radial direction of the belt undesirably lowers, while when it exceeds 30°, the rigidity in circumferential direction of the belt undesirably lowers.

In the pneumatic radial tire shown in Fig. 1, the rubber reinforcing layer 3 is arranged between the tread 4 and the belt ply layer 2. Preferably, the rubber reinforcing layer 3 is extended from an end portion of an outermost layer in the radial direction of the tire among the belt ply layers 2 to the other end portion thereof as illustrated.

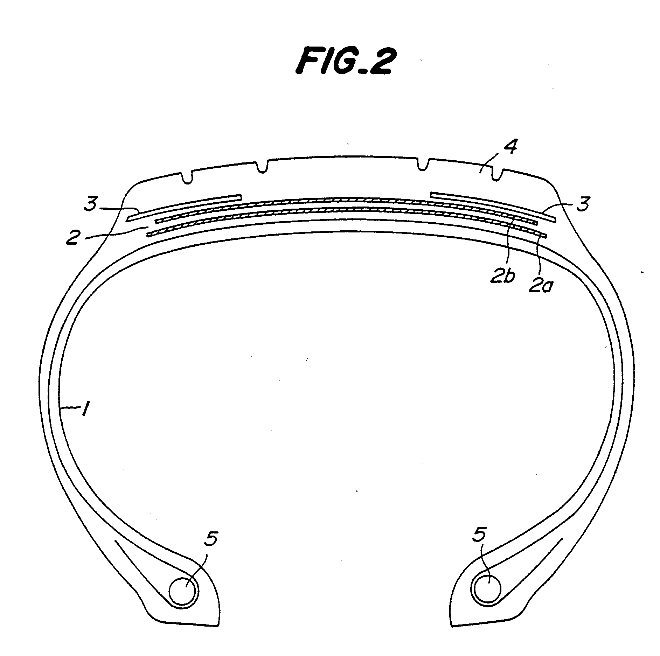

In the pneumatic radial tire shown in Fig. 2, the rubber reinforcing layer 3 is divided into two parts, each of which parts is arranged to extend from a point corresponding to 1/4 of a full width of an outermost layer among the belt ply layers 2 in the radial direction of the tire to the end portion of the outermost layer of the belt ply layers 2 in the radial direction of the tire.

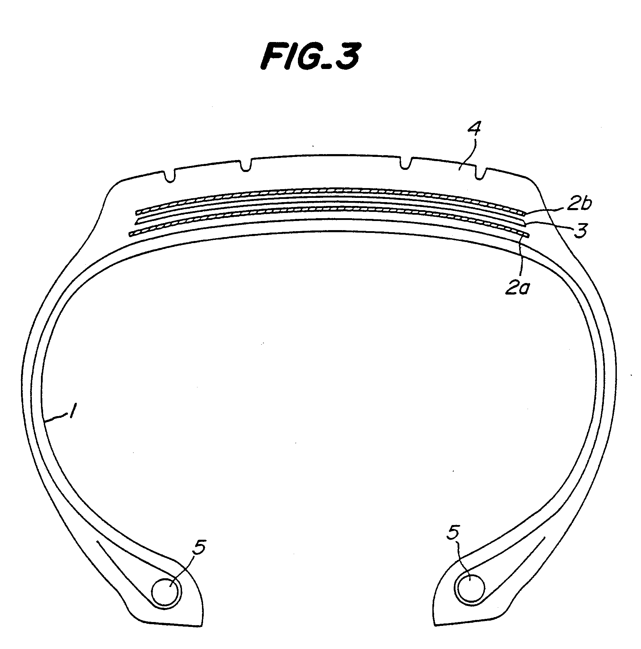

In the pneumatic radial tire shown in Fig. 3, the rubber reinforcing layer 3 is arranged between the belt ply layers 2. Moreover, when the belt ply layers 2 are 3 or more, it is preferable that the rubber reinforcing layer 3 is adjacent to an outermost layer among the belt ply layers 2 in the radial direction of the tire inside the outermost layer in the radial direction of the tire and extended from an end portion of the outermost layer in the radial direction of the tire to the other end portion thereof.

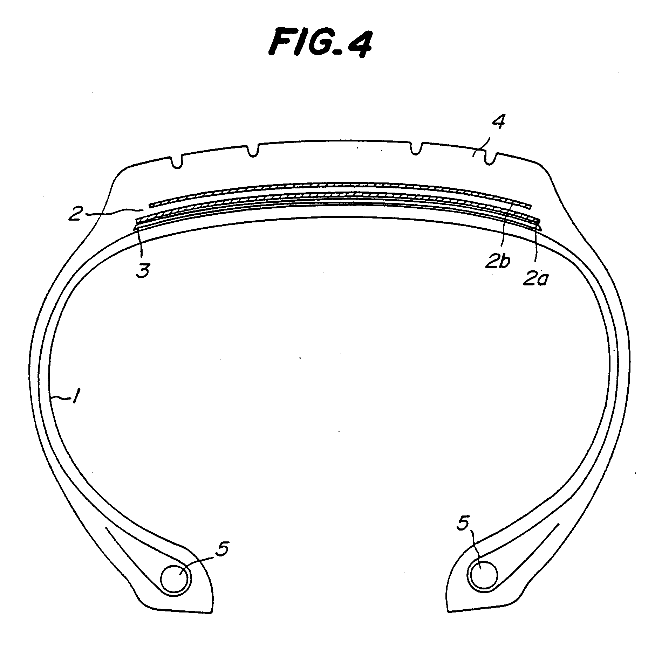

In the pneumatic radial tire shown in Fig. 4, the rubber reinforcing layer 3 is arranged between the belt ply layer 2 and the crown region of the carcass 1. Preferably, the rubber reinforcing layer 3 is adjacent to an innermost layer among the belt ply layers 2 in the radial direction of the tire inside the innermost layer in the radial direction of the tire and extended from an end portion of the innermost layer of the belt ply layers 2 in the radial direction of the tire to the other end portion thereof.

Moreover, 25% modulus of the rubber reinforcing layer 3 is preferably 40~70 kg/cm$^2$. The 25% modulus according to the invention means a modulus when a tensile test is carried out in the radial direction of the tire.

In the belt ply layer of the tire, the cord is apt to be broken as the twisting number becomes small, and the breakage is most caused in the single filament cord. However, even in tires using the single filament cords in the belt ply layer, when the rubber reinforcing layer is applied to the belt ply layer over at least a distance from a mid-point between center of ground contact width of the tread and ground contact end to the end of the belt layer, the fatigue resistance of the cord can be improved.

Particularly, in case of the fine single filament cord of not more than 0.35 mm in filament diameter, the belt bending rigidity can not be made high as compared with that of the usual twisted cord, so that the resistances to belt breakage and belt end separation are poorer than those of the conventional twisted cord. However, such a drawback can be overcome by the use of the rubber reinforcing layer, and also it is possible to ensure the resistance level higher than the conventional one when the filament diameter becomes 0.28 mm. Thus, the tires having the rubber reinforcing layer and using the single filament cord exhibit good running performances and are small in the rolling resistance.

The reason why the filament diameter of the single filament cord is limited to a range of 0.28~0.70 mm is due to the fact that when it is less than 0.28 mm, the belt folding property and resistance to belt end separation are poor and the end count increases to degrade the operability, while when it exceeds 0.70 mm, the ride comfortability against vibrations largely degrades. Further, it is desirably within a range of 0.30~0.40 mm.

The reason why the end count of the single filament cord per 50 mm is limited to 30~120 cords is due to the fact that when it is less than 30 cords, the belt rigidity can not sufficiently be ensured and also the shearing strain between the belt layers becomes large to cause the belt folding or the belt end separation, while when it exceeds 120 cords, the actual production is difficult because of excessive end count. Preferably, it is within a range of 35~80 cords.

Moreover, high carbon steel having a C content of 0.80~0.90 wt% is advantageously suitable as a material for the single filament cord.

Further, the cord distance between the adjoining belt layers, i.e. minimum distance between outer peripheries of the cords (coating rubber gauge between the single filament cords) is not less than 0.8 mm, preferably not less than 1.0 mm from a viewpoint of the enhancement of resistance to belt end separation and fatigue resistance of cord through the rubber reinforcing layer.

Then, the rubber reinforcing layer itself will be described in detail.

As a means for effectively enhancing the bending rigidity in radial direction, there are the use of hard rubber stock as a base rubber and the optimization of its arrangement. As the other means, there are optimized the materials of tread rubber, belt coating rubber, layer cap member and ply as well as the used number thereof. However, the inventors could confirm that the increase of modulus in the base rubber and the optimization of base rubber arrangement are effective for satisfying the resistance to cord breakage while avoiding bad influence upon the running performances and the rolling resistance. Although the same improving effect on cord breakage as in the increase of modulus of the base rubber is obtained even by the improvement of layer cap member, the use of the layer cap member degrades the uniformity at joint portion and is disadvantageous in the cost. On the contrary, when the bending rigidity in radial direction is achieved by using the hard rubber stock as a base rubber, there are large merits that the joint portion is absent and loss level of rubber is controlled, and consequently the uniformity level is good and the level of the rolling resistance can freely be controlled.

The inventors have made various examinations with respect to the use of hard rubber stock as a base rubber and the arrangement thereof, and found the following facts.

Firstly, when the hard rubber stock is used as a base rubber (belt reinforcing layer) in the usual tread structure (inner liner + one carcass ply + two belt ply layers + tread rubber), the modulus of this rubber stock is variously changed. As a result, it has been found that when 25% modulus is not less than 20 kg/cm², the cord breakage through the eight shape slalom test can be controlled. Further, when the single filament wire is applied to the usual tread structure and the hard rubber stock is arranged as a base rubber outside the wire in the radial direction of the tire, if the 25% modulus is not less than 20 kg/cm², there is no problem on the resistance to cord breakage, and also the running performances and the rolling resistance are held satisfactorily. Moreover, when the 25% modulus is not less than 40 kg/cm², the resistance to cord breakage, running performances and rolling resistance are further improved, and preferably it is possible to thin the gauge of the base rubber.

On the other hand, when it exceeds 80 kg/cm², the rubber composition at unvulcanized state becomes very hard, and the operability largely lowers to undesirably cause the considerable reduction of productivity.

The reason why the thickness of the rubber reinforcing layer according to the invention is limited to not less than 1 mm is due to the fact that when it is less than 1 mm, the improving effect of the fatigue resistance is not recognized. Moreover, the upper limit of the thickness is necessarily determined by the thickness of the tire product, so that it is not particularly necessary to set the upper limit, but it is preferably 5 mm. When it exceeds 5 mm, the heat build-up and high-speed durability of the tire lower. In the radial tires for passenger cars, the thickness of tire product is thin, so that the thickness of the rubber reinforcing layer is preferable to be not more than 4 mm.

As to the arrangement of the hard rubber stock, the inventors have made various examinations with respect to cases that the reinforcing layer of hard rubber stock is arranged between tread and belt, between belt ply layers and between belt and crown portion of carcass, and found that the improving effect on the resistance to cord breakage becomes particularly conspicuous when the reinforcing layer is arranged between the tread and the belt. This is considered due to the fact that the position of neutral axis of the composite body existing when the bending input is applied approaches to the cords of the innermost belt ply layer in the radial direction causing the cord breakage, and consequently the cord breakage is hardly caused.

As mentioned above, it is ideal that the reinforcing layer of hard rubber stock is arranged between the tread and the belt in the tire, i.e. outside the belt ply layer in the radial direction of the tire from a viewpoint of the resistance to cord breakage, but even when it is arranged between the belt ply layers or between the belt and the carcass, the cord breakage can be sufficiently be prevented and the running performances and rolling resistance can be made good by properly regulating the modulus of the hard rubber stock. The merit inherent to these arrangements lies in a point that when the rubber reinforcing layer is arranged between the tread and the belt, it is required to arrange the hard rubber stock so as not to expose if the tread wearing completely proceeds, but when it is arranged inside the belt ply layer in the radial direction of the tire, there is not caused the above anxiety.

The invention will be described with reference to the following example.

Various radial tires having a tire size of 165/SR13 were manufactured according to dimension and size as shown in the following Table 1, and then the fatigue resistance of cords, resistance to belt end separation, indoor steering property and rolling resistance were evaluated with respect to these tires. The measured results are also shown in Table 1. The compounding example of rubber layer used as the reinforcing layer of the tire in the same Table was according to the following Table 2 (part by weight).

## Table 1(a)

| Tire No. | | 1 | 2 | 3 | 4 | 5 |
|---|---|---|---|---|---|---|
| | | Example 1 | Example 2 | Example 3 | Comparative Example 1 | Comparative Example 2 |
| Design factors | Kind of belt cord (filament diameter) | single filament cord (0.50 mm) | single filament cord (0.50 mm) | single filament cord (0.50 mm) | single filament cord (0.50 mm) | 1×5×0.23 |
| | End count (/50 mm) | 48 | 48 | 48 | 48 | 38 |
| | Cord angle of belt | 68 | 68 | 68 | 68 | 68 |
| | Belt coating gauge (mm) | 0.50 | 0.50 | 0.50 | 0.50 | 0.50 |
| | Rubber reinforcing layer *1 25% modulus (kg/cm²) | 65 | 40 | 20 | 10 | 10 |
| | Arrangement of rubber reinforcing layer applied (Figs. 1-4) (thickness: mm) | Fig. 1 (1.5) | Fig. 1 (1.5) | Fig. 1 (1.5) | Fig. 1 (1.5) | Fig. 1 (1.5) |
| | Compounding example (in Table 2) | Compounding Example 1 | Compounding Example 2 | Compounding Example 3 | Compounding Example 4 | Compounding Example 4 |
| Evaluation results | Resistance to cord breakage *2 | 0 | 0 | 38 | 43 | 0 |
| | Indoor steering property *3 | 104 | 104 | 103 | 102 | 100 |
| | Rolling resistance *4 | 104 | 106 | 110 | 105 | 100 |
| | Resistance to belt end separation (mm) *5 | 1.5 | 2.0 | 2.5 | 3.0 | 8.0 |

EP 0 414 892 B1

EP 0 414 892 B1

Table 1(b)

| Tire No. | | 6 | 7 | 8 | 9 | 10 | 11 |
|---|---|---|---|---|---|---|---|
| | | Example 4 | Example 5 | Example 6 | Example 7 | Comparative Example 3 | Example 8 |
| Design factors | Kind of belt cord (filament diameter) | single fila-ment cord (0.50 mm) | single fila-ment cord (0.50 mm) | single fila-ment cord (0.50 mm) | single fila-ment cord (0.50 mm) | 1×5×0.23 | single fila-ment cord (0.50 mm) |
| | End count(/50 mm) | 48 | 48 | 48 | 48 | 38 | 48 |
| | Cord angle of belt | 68 | 64 | 68 | 68 | 68 | 68 |
| | Belt coating gauge (mm) | 0.50 | 0.50 | 0.50 | 0.50 | 0.50 | 0.50 |
| | Rubber reinforcing layer 25% modulus *1 ($kg/cm^2$) | 65 | 65 | 65 | 65 | 10 | 65 |
| | Arrangement of rubber reinforcing layer applied (Figs. 1-4) (thickness: mm) | Fig. 1 (1.5) | Fig. 1 (1.5) | Fig. 4 (1.5) | Fig. 3 (1.5) | Fig. 1 (1.5) | Fig. 2 (1.5) |
| | Compounding example (in Table 2) | Compounding Example 1 | Compounding Example 1 | Compounding Example 1 | Compounding Example 1 | Compounding Example 4 | Compounding Example 1 |
| Evalua-tion results | Resistance to cord breakage *2 | 0 | 0 | 10 | 5 | 0 | 4 |
| | Indoor steering property *3 | 104 | 103 | 102 | 103 | 100 | 102 |
| | Rolling resistance *4 | 104 | 104 | 104 | 104 | 100 | 104 |
| | Resistance to belt end separation (mm) *5 | 1.5 | 1.0 | 2.0 | 0 | 8.0 | 2.0 |

*1 ... measured according to JIS K6301 (tensile testing method). In this case, the tensile speed was 100 mm/min, and the test specimen of Dumbbell shape was subjected to a tensile test in the radial direction of the tire to measure the modulus in the radial direction of the tire. The shape of Dumbbell test specimen was adjusted to be larger and thicker as far as the available sample shape was permitted.

*2 ... eight shape slalom test, i.e. the tire was rapidly turned on a rhem skating curve by using a rhem skating automatic running device, and after the repetition of this procedure 300 lap times, the tire was cut to measure the number of broken cords in the belt layer. 0 shows no breakage of belt cord.

*3 ... when the tire itself was rotated on a rotating drum according to JIS D4202, the cornering force, self-aligning torque and camber thrust were measured. The indoor steering property was totally evaluated from these values and represented by an index on the basis that tire No. 13 was 100. The larger the numerical value, the better the property.

*4 ... slalom test results on a drum according to JIS D4202, 4203 and 6401 were represented by an index on the basis that tire No. 13 was 100. The larger the numerical value, the smaller the rolling resistance.

*5 ... after general running test, i.e. the tire was

mounted on a taxing car and run over a distance of 60,000 km, the crack length produced inside the belt layer was measured within an accuracy of ±0.5 mm, and the measured value was shown on average.  0 shows no crack.

Table 2

| | Compounding example 1 | Compounding example 2 | Compounding example 3 | Compounding example 4 |
|---|---|---|---|---|
| Natural rubber | 100 | 100 | 100 | 70 |
| SBR 1500　　　*1 | - | - | - | 30 |
| Carbon black HAF　*2 | 70 | 70 | - | 30 |
| Carbon black FEF　*3 | - | - | 42 | - |
| Stearic acid | 2 | 2 | 2 | 2 |
| Process oil | - | - | - | 6 |
| Zinc white | 7.5 | 7.5 | 5 | 2.5 |
| Antioxidant　　　*4 | - | - | 1 | 1 |
| Vulcanization accelerator　　*5 | 1.5 | 1.5 | 1.8 | 0.6 |
| Sulfur | 4 | 4 | 7 | 2.75 |
| Arunopol PN 844　*6 | 20 | 10 | - | - |
| Hexamethylene tetramine | 2.0 | 1 | 0.5 | - |
| Resorcin | - | - | 1.0 | - |
| Low loss agent　　*7 | - | - | 2.0 | - |
| Elongation at break (%) | 220 | 207 | 130 | 490 |
| 25% Modulus (kg/cm$^2$) | 65 | 40 | 20 | 10 |
| Resilience | 43 | 47 | 85 | 76 |

*1 ... made by Japan  Synthetic Rubber Co., Ltd., styrene-butadiene rubber  
*2 ... IA 86 mg/g, DBP 102 cm$^3$/100 g  
*3 ... IA 43 mg/g, DBP 121 cm$^3$/100 g  
*4 ... 2,2'-methylene bis(4-methyl-6-tert-butyl phenyl)  
*5 ... N-oxydiethylene-2-benzothiazyl sulfeneamide  
*6 ... alkylphenol novolak resin, trade name of Hoechst  
*7 ... paranitroso diphenyl amine

From Table 1, it is understood that tire Nos. 1~3, 6~9 and 11 according to the invention using the single filament cord in a belt layer and arranging the rubber reinforcing layer show good results on all items.

On the other hand, in then tires using the 1×5 twisted cord in the belt layer and adding low modulus reinforcing layer (tire Nos. 5, 10), the fatigue resistance of cord, rolling resistance and indoor steering property can be maintained, but the resistance to belt end separation is fairly poor as compared with the radial tires according to the invention.

Further, when the 25% modulus of the rubber reinforcing layer is made low as in tire No. 4, the resistance to belt end separation is poor and the fatigue resistance of cord largely lowers, so that it is difficult to simultaneously establish the durability and the running performances.

In the pneumatic radial tire according to the invention, the simultaneous establishment between the running performances and the durability can be achieved in a high dimension. Further, the single filament cord can be applied to the belt layer, so that the twisting step for the cord is useless and the tire can cheaply be provided as compared with the conventional tire.

## Claims

1. A pneumatic radial tire comprising a radial carcass ply (1), a tread (4) arranged outside a crown region of the carcass in radial direction, and a belt (2) disposed between the tread (4) and the crown region of the carcass, the belt (2) being comprised of at least two belt ply layers (2a, 2b) each containing single metal filament cords arranged in parallel to each other and at a cord angle of 15-30° with respect to the equatorial plane of the tire and having an end count of more than 30 cords per 50 mm, and a reinforcing layer (3) being arranged substantially adjacent to the belt ply layer, characterized in that the single metal filament cords are of 0.28-0.70 mm in filament diameter, said cord angle is from 15 to 30°, the end count of the belt layers (2a, 2b) is 30-120 cords per 50mm and the reinforcing layer is a rubber layer (3) having a 25% modulus of 20-80 kg/cm² and a thickness of not less than 1 mm.

2. The pneumatic radial tire according to claim 1, wherein said rubber reinforcing layer (3) is arranged between said tread (4) and said belt (2).

3. The pneumatic radial tire according to claim 1, wherein said rubber reinforcing layer (3) is arranged between said belt ply layers (2a, 2b).

4. The pneumatic radial tire according to claim 1, wherein said rubber reinforcing layer (3) is arranged between said belt (2) and said crown region of said carcass.

5. The pneumatic radial tire according to claim 2, wherein said rubber reinforcing layer (3) extends from one end portion of the radially outermost belt layer (2b) to the other end portion thereof.

6. The pneumatic radial tire according to claim 2, wherein said rubber reinforcing layer (3) is divided into two parts, each of which parts is arranged to extend from a point corresponding to 1/4 of the full width of the radially outermost belt layer (2b) to the end portion of said radially outermost belt layer (2b).

7. The pneumatic radial tire according to claim 3, wherein said rubber reinforcing layer (3) is adjacent to and radially inside said outermost belt layer (2b) and extended from one end portion of said outermost belt layer (2b) to the other end portion thereof.

8. The pneumatic radial tire according to claim 4, wherein said rubber reinforcing layer (3) is adjacent to and radially inside the radially innermost belt layer (2a) and extended from one end portion of said innermost belt layer (2a) to the other end portion thereof.

9. The pneumatic radial tire according to any one of claims 2-4, wherein said rubber reinforcing layer (3) has a 25% modulus of 40-70 kg/cm².

## Patentansprüche

1. Radialluftreifen mit einer radialen Karkassenlage (1), einer Lauffläche (4), die außerhalb eines Kronengebietes der Karkasse in radialer Richtung angeordnet ist, und einem Gürtel (2), der zwischen der Lauffläche (4) und dem Kronengebiet der Karkasse angeordnet ist, wobei der Gürtel (2) mindestens zwei Gürtellagen-Schichten (2a, 2b) aufweist, von denen jede Cordfäden aus einem einzelnen Metallfilament enthält, die parallel zueinander und unter einem Cordfaden-Winkel von 15-30° bezüglich der Äquatorebene des Reifens angeordnet sind, und eine Fadendichte von mehr als 30 Cordfäden pro 50 mm aufweisen, und einer Verstärkungsschicht (3), die im wesentlichen an die Gürtellagen-Schichten angrenzt, dadurch gekennzeichnet, daß die Cordfäden aus einem einzelnen Metallfilament einen Durchmesser von 0,28 bis 0,70 mm haben, der Cordfaden-Winkel zwischen 15 und 30° liegt, und die Fadendichte bei den Gürtelschichten (2a, 2b) 30-120 Cordfäden pro 50 mm beträgt, und die Verstärkungsschicht eine Gummischicht (3) ist, die eine Zugfestigkeit bei 25% Dehnung von 20-80 kg/cm$^2$, und eine Dicke von nicht weniger als 1 mm aufweist.

2. Radialluftreifen gemäß Anspruch 1, wobei die Gummiverstärkungsschicht (3) zwischen der Lauffläche (4) und dem Gürtel (2) angeordnet ist.

3. Radialluftreifen gemäß Anspruch 1, wobei die Gummiverstärkungsschicht (3) zwischen den Gürtellagenschichten (2a, 2b) angeordnet ist.

4. Radialluftreifen gemäß Anspruch 1, wobei die Gummiverstärkungsschicht (3) zwischen dem Gürtel (2) und dem Kronengebiet der Karkasse angeordnet ist.

5. Radialluftreifen gemäß Anspruch 2, wobei die Gummiverstärkungsschicht (3) sich von einem Endbereich der in radialer Richtung äußersten Gürtelschicht (2b) bis zu dem anderen Endbereich dieser Gürtelschicht erstreckt.

6. Radialluftreifen gemäß Anspruch 2, wobei die Gummiverstärkungsschicht (3) in zwei Teile unterteilt ist, von denen jeder so angeordnet ist, daß er sich von einem Punkt, der 1/4 der vollen Breite der in radialer Richtung äußersten Gürtelschicht (2b) entspricht, bis zu dem Endbereich dieser Gürtelschicht erstreckt.

7. Radialluftreifen gemäß Anspruch 3, wobei die Gummiverstärkungsschicht (3) an die äußerste Gürtelschicht (2b) angrenzt und in radialer Richtung innerhalb dieser Gürtelschicht angeordnet ist, und sich von einem Endbereich dieser äußersten Gürtelschicht (2b) bis zu dem anderen Endbereich dieser Gürtelschicht erstreckt.

8. Radialluftreifen gemäß Anspruch 4, wobei die Gummiverstärkungsschicht (3) an die in radialer Richtung innerste Gürtelschicht (2a) angrenzt und in radialer Richtung innerhalb dieser Gürtelschicht angeordnet ist, und sich von einem Endbereich dieser innersten Gürtelschicht (2a) bis zu dem anderen Endbereich dieser Gürtelschicht erstreckt.

9. Radialluftreifen gemäß irgendeinem der Ansprüche 2-4, wobei die Gummiverstärkungsschicht (3) eine Zugfestikeit bei 25% Dehnung von 40-70 kg/cm$^2$ hat.

## Revendications

1. Un pneumatique radial comprenant une nappe de carcasse radiale (1), une bande de roulement (4) agencée à l'extérieur d'une région de sommet de la carcasse dans la direction radiale, et une ceinture (2) agencée entre la bande de roulement (4) et la région de sommet de la carcasse, la ceinture (2) étant composée d'au moins deux couches de nappe de ceinture (2a, 2b) contenant chacune des câblés métalliques à filament unique, agencés parallèlement les uns aux autres et à un angle de câblé de 15 à 30° par rapport au plan équatorial du pneumatique et ayant une densité dépassant 30 câblés par 50 mm, ainsi qu'une couche de renforcement (3) agencée pratiquement de façon contiguë à la couche de nappe de ceinture, caractérisé en ce que les câblés métalliques à filament unique ont un diamètre de filament compris entre 0,28 et 0,70 mm, ledit angle de câblé étant compris entre 15 et 30°, la densité des couches de ceinture (2a, 2b) étant de 30 à 120 câblés par 50 mm et la couche de renforcement étant une couche en caoutchouc (3) ayant un module de 25% de 20 à 80 kg/cm$^2$ et une épaisseur non inférieure à 1 mm.

2. Le pneumatique radial selon la revendication 1, dans lequel ladite couche de renforcement en caoutchouc (3) est agencée entre ladite bande de roulement (4) et ladite ceinture (2).

3. Le pneumatique radial selon la revendication 1, dans lequel ladite couche de renforcement en caoutchouc (3) est agencée entre lesdites couches de nappe de ceinture (2a, 2b).

4. Le pneumatique radial selon la revendication 1, dans lequel ladite couche de renforcement en caoutchouc (3) est agencée entre ladite ceinture (2) et ladite région de sommet de ladite carcasse.

5. Le pneumatique radial selon la revendication 2, dans lequel ladite couche de renforcement en caoutchouc (3) s'étend d'une partie d'extrémité de la couche de ceinture radialement la plus à l'extérieur (2b) vers l'autre partie d'extrémité correspondante.

6. Le pneumatique radial selon la revendication 2, dans lequel ladite couche de renforcement en caoutchouc (3) est divisée en deux parties, chacune des ces parties étant agencée de sorte à s'étendre d'un point correspondant à 1/4 de la largeur totale de la couche de ceinture radialement la plus à l'extérieur (2b) vers la partie d'extrémité de ladite couche de ceinture radialement la plus à l'extérieur (2b).

7. Le pneumatique radial selon la revendication 3, dans lequel ladite couche de renforcement en caoutchouc (3) est adjacente à la couche de ceinture la plus à l'extérieur (2b) et radialement à l'intérieur de celle-ci, s'étendant d'une partie d'extrémité de ladite couche de ceinture la plus à l'extérieur (2b) vers l'autre partie d'extrémité correspondante.

8. Le pneumatique radial selon la revendication 4, dans lequel ladite couche de renforcement en caoutchouc (3) est adjacente à la couche de ceinture la plus à l'intérieur (2a) et radialement à l'intérieur de celle-ci, s'étendant d'une partie d'extrémité de ladite couche de ceinture la plus à l'intérieur (2a) vers l'autre partie d'extrémité correspondante.

9. Le pneumatique radial selon l'une quelconque des revendications 2 à 4, dans lequel ladite couche de renforcement en caoutchouc (3) a un module de 25% compris entre 40 et 70 kg/cm².

# FIG. 1

# FIG.2

# FIG.3

# FIG.4